# EUROPÄISCHE PATENTSCHRIFT

(11) **EP 2 981 797 B1**
(45) Veröffentlichungstag und Bekanntmachung des Hinweises auf die Patenterteilung: **27.03.2019**
(21) Anmeldenummer: 14705789.7
(22) Anmeldetag: 24.02.2014
(51) Int. Cl.: G01L 3/10

(54) **VERFAHREN ZUM HERSTELLEN EINER MAGNETEINHEIT FÜR EINE SENSOREINRICHTUNG EINES KRAFTFAHRZEUGS, MAGNETEINHEIT, SENSOREINRICHTUNG UND KRAFTFAHRZEUG**
METHOD FOR PRODUCING A MAGNET UNIT FOR A SENSOR DEVICE OF A MOTOR VEHICLE, MAGNET UNIT, SENSOR DEVICE AND MOTOR VEHICLE
PROCÉDÉ DE FABRICATION D'UNE UNITÉ MAGNÉTIQUE POUR UN DISPOSITIF CAPTEUR D'UN VÉHICULE À MOTEUR, UNITÉ MAGNÉTIQUE, DISPOSITIF CAPTEUR ET VÉHICULE À MOTEUR

(30) Priorität: 05.04.2013 DE 102013006567
(43) Veröffentlichungstag der Anmeldung: 10.02.2016
(73) Patentinhaber: Valeo Schalter und Sensoren GmbH, 74321 Bietigheim-Bissingen (DE)
(72) Erfinder: SCHOEPE, Roman, 74321 Bietigheim-Bissingen (DE); FROEHLICH, Ekkehart, 74226 Nordheim (DE)
(86) Internationale Anmeldenummer: PCT/EP2014/053499
(87) Internationale Veröffentlichungsnummer: WO 2014/161692

(56) Entgegenhaltungen:
- DE-A1-102009 039 082

## Beschreibung

Die Erfindung betrifft ein Verfahren zum Herstellen einer Magneteinheit für eine Sensoreinrichtung zum Erfassen einer einen Rotationszustand einer Lenkwelle eines Kraftfahrzeugs charakterisierenden Messgröße. Es wird ein ringförmiges Magnetelement bereitgestellt. Außerdem wird eine Hülse bereitgestellt, über welche die Magneteinheit mit einem Wellenteil der Lenkwelle verbunden werden kann. Das Magnetelement wird mit der Hülse verbunden. Die Erfindung betrifft außerdem eine Magneteinheit für eine Sensoreinrichtung eines Kraftfahrzeugs, mit einem ringförmigen Magnetelement und einer mit dem Magnetelement verbundenen Hülse, über welche die Magneteinheit mit einem Wellenteil verbindbar ist. Des Weiteren betrifft die Erfindung eine Sensoreinrichtung sowie ein Kraftfahrzeug.

Drehmomentsensoreinrichtungen zur Erfassung eines auf eine Lenkwelle eines Kraftfahrzeugs aufgebrachten Drehmoments sind bereits Stand der Technik. Solche Drehmomentsensoreinrichtungen können beispielsweise bei elektrischen Lenksystemen eingesetzt werden. Eine solche Drehmomentsensoreinrichtung ist zum Beispiel aus dem Dokument US 2004/0194560 A1 sowie aus der Druckschrift DE 102 40 049 A1 bekannt. Die Drehmomentsensoreinrichtung ist dabei an zwei sich in axialer Richtung gegenüberliegenden Wellenteilen bzw. Teilwellen der Lenkwelle angebracht. An dem ersten Wellenteil ist ein Magnet - etwa ein Ringmagnet - angeordnet, während auf dem anderen Wellenteil ein Halter mit einem magnetischen Stator angebracht ist, welcher dem Dauermagneten in radialer Richtung über einen kleinen Luftspalt gegenüberliegt. Über den Stator - welcher üblicherweise aus zwei separaten Statorteilen besteht - wird der magnetische Fluss des Magneten hin zu einem ersten und einem zweiten Flussleiter hingeleitet, welche dann den magnetischen Fluss an einen Magnetsensor - beispielsweise einen Hall-Sensor - abgeben.

Eine solche Drehmomentsensoreinrichtung ist außerdem aus dem Dokument DE 10 2007 043 502 A1 bekannt.

Außerdem sind aus dem Stand der Technik auch Lenkwinkelsensoreinrichtungen bekannt, welche zur Erfassung des aktuellen Lenkwinkels der Lenkwelle dienen. Eine solche Einrichtung ist zum Beispiel aus dem Dokument DE 10 2008 011 448 A1 als bekannt zu entnehmen. Eine Drehbewegung der Lenkwelle wird hier über ein Getriebe auf ein kleineres Zahnrad übertragen, welches einen Magneten trägt. Die Rotation des kleineren Zahnrades wird dann mithilfe eines Magnetsensors erfasst.

Zum Stand der Technik gehören auch solche Vorrichtungen, bei denen die Drehmomentsensoreinrichtung einerseits sowie die Lenkwinkelsensoreinrichtung andererseits integral als eine gemeinsame Einheit ausgebildet sind.

Vorliegend richtet sich das Interesse auf eine Magneteinheit einer Drehmomentsensoreinrichtung oder einer kombinierten Drehmoment- und Lenkwinkelsensoreinrichtung. Eine solche Magneteinheit besteht üblicherweise aus dem genannten Magnetelement, welches in Form eines Dauermagneten ausgebildet ist, sowie aus einer metallischen Hülse, über welche die Magneteinheit mit dem zugeordneten Wellenteil der Lenkwelle verbunden wird. Während die Hülse also aus Metall gebildet ist, ist das Magnetelement in der Regel aus einem mit Magnetpartikeln gefüllten Kunststoff bereitgestellt, der aufgrund des hohen Füllgrads relativ spröde ist. Die Hülse kann auf dem zugeordneten Wellenteil beispielsweise mittels Kleben, Schweißen, Verstemmen oder Pressen befestigt werden.

Eine besondere Herausforderung besteht darin, eine zuverlässige Verbindung zwischen dem Magnetelement einerseits und der Hülse andererseits bereitzustellen. Beim direkten Anspritzen des Magnetelements an die Hülse kommt es nämlich beim Abkühlen der Kunststoffschmelze zu Schrumpfspannungen, welche insbesondere in Verbindung mit den unterschiedlichen Wärmeausdehnungskoeffizienten der Hülse und des Magnetelements bei den im Betrieb auftretenden Temperaturunterschieden zur Bildung von Rissen in dem Magnetelement führen können. Aus diesem Grund wird in der Druckschrift EP 1 123 794 A1 vorgeschlagen, das Magnetelement nicht unmittelbar, sondern über ein Zwischenelement aus einem elastischen Material an der Hülse zu befestigen. Mit anderen Worten wird die Anbindung zwischen dem Magnetelement und der Metallhülse über einen elastischen Zwischenkunststoff in einem zusätzlichen Umspritzprozess hergestellt. Diese Lösung hat sich jedoch als relativ nachteilig erwiesen, weil der recht aufwändige Formschluss der zu verbindenden Teile und die für den Umspritzprozess benötigten Dichtflächen die in der Regel gewünschten, unterschiedlichen Durchmesser der Hülse und des Magnetelements und somit den entsprechenden Bauraum einschränken. Außerdem ist die vorgeschlagene Lösung verhältnismäßig aufwändig und kostenintensiv.

Eine weitere Lösung, wie die Hülse mit dem Magnetelement verbunden werden kann, ist in der DE 198 36 451 C2 beschrieben. Hier wird die Hülse mit dem kunststoffgebundenen Magnetmaterial umspritzt, wobei die Hülse ein laschenförmiges Teil aufweist, welches mit dem hochgefüllten Kunststoff umgeben und im hochgefüllten Kunststoff so angeordnet ist, dass es Schrumpfspannungen des Kunststoffs aufnimmt. Hier erfolgt die Verbindung der Hülse mit dem Magnetelement also in einem Spritzgussverfahren, wodurch wiederum Schrumpfspannungen erzeugt werden können.

DE102009039082 offenbart einen aus Magnetring und Trägerhülse bestehende Magnetbaugruppe gemäß des Oberbegriffs Anspruchs 10 sowie ein Verfahren derer Herstellung gemäß der respektiven Oberbegriffe der Ansprüche 1 und 10.

Es ist Aufgabe der Erfindung, eine Lösung aufzuzeigen, wie bei einem Verfahren der eingangs genannten Gattung die Hülse und das Magnetelement besonders zuverlässig und betriebssicher miteinander verbunden werden können, insbesondere ohne dass ein zusätzliches Zwischenelement in aufwändiger Weise eingesetzt zu werden braucht.

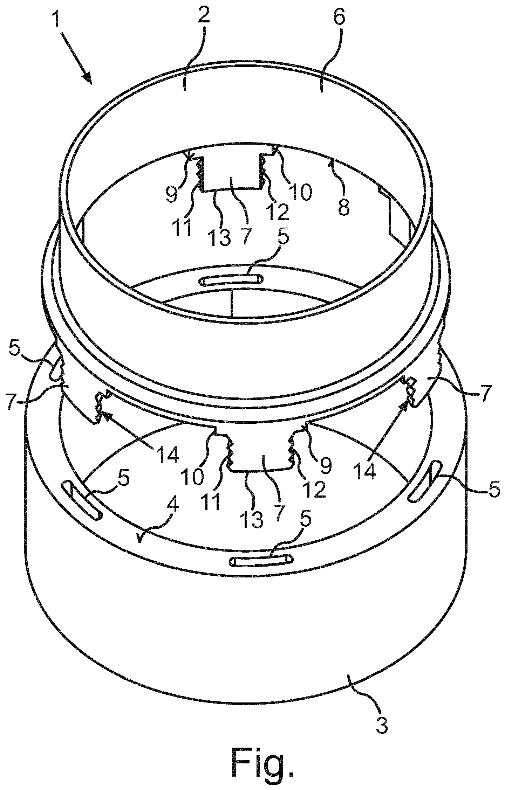

Diese Aufgabe wird erfindungsgemäß durch ein Verfahren, durch eine Magneteinheit, durch eine Sensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Bei einem erfindungsgemäßen Verfahren wird eine Magneteinheit hergestellt, welche speziell für eine Sensoreinrichtung konzipiert wird, die zum Erfassen einer einen Rotationszustand einer Lenkwelle eines Kraftfahrzeugs charakterisierenden Messgröße dient, insbesondere eines Drehmoments und/oder eines Lenkwinkels. Es werden ein ringförmiges Magnetelement einerseits sowie eine Hülse andererseits bereitgestellt. Die wulstartige Hülse dient zum Verbinden der Magneteinheit mit einem zugeordneten Wellenteil der Lenkwelle. Nach dem Bereitstellen des Magnetelements und der Hülse werden diese Teile miteinander verbunden. Erfindungsgemäß ist vorgesehen, dass die Hülse mit einem Grundkörper und einer Vielzahl von vom Grundkörper abstehenden Laschen ausgebildet wird und das Verbinden des Magnetelements mit der Hülse umfasst, dass die Laschen in jeweilige Aussparungen des Magnetelements unter Erwärmen des Magnetelements eingebettet werden.

Unter Verzicht auf ein elastisches Zwischenstück, wie es im Stand der Technik eingesetzt wird, wird durch das erfindungsgemäße Verfahren eine Magneteinheit geschaffen, welche eine besonders zuverlässige, rutschfeste und betriebssichere Verbindung zwischen dem Magnetelement und der Hülse aufweist. Dadurch, dass die Hülse nicht mit dem Kunststoffmaterial umspritzt wird, können Risse in dem Magnetelement verhindert werden, die im Stand der Technik aufgrund von Schrumpfspannungen entstehen. Es erübrigt sich außerdem der Einsatz eines elastischen Zwischenstücks mit den damit verbundenen Nachteilen hinsichtlich des Herstellungsaufwands und der Kosten.

Durch das Erwärmen des Magnetelements wird selbiges Magnetelement zumindest innerhalb der Aussparungen aufgeschmolzen. Dadurch wird beim Einführen der Laschen in die jeweiligen Aussparungen eine formschlüssige Verbindung zwischen den Laschen einerseits und dem Magnetelement andererseits gebildet. Durch das Aufschmelzen des Magnetelements innerhalb der Aussparungen werden die Laschen durch das Material des Magnetelements dicht umschlossen, wodurch ein wirkungsvoller radialer und/oder axialer Formschluss gebildet wird. Im unverbundenen Zustand sind die Aussparungen des Magnetelements vorzugsweise ein wenig kleiner bzw. enger als die Laschen, sodass insgesamt ein besonders fester Sitz der Laschen innerhalb der Aussparungen gewährleistet werden kann.

Die Laschen stehen von dem Grundkörper der Hülse in axialer Richtung ab und bilden somit axiale Fortsätze, welche insbesondere von einer axialen Stirnseite des Grundkörpers abstehen und in axiale Richtung weisen. Somit werden die Laschen in die jeweiligen Aussparungen in axialer Richtung aufgenommen und erstrecken sich somit in die jeweiligen Aussparungen axial hinein. Somit ist zumindest in radialer Richtung sowie in Umfangsrichtung zusätzlich eine kraftschlüssige Verbindung geschaffen, welche auch größeren Fliehkräften standhalten kann.

Die Aussparungen sind durch axiale Taschen gebildet, die an einer axialen Stirnseite des Magnetelements ausgebildet sind. Diese axialen Taschen können in Form von Schlitzen ausgebildet sein, welche in Umfangsrichtung länglich ausgeführt, in radialer Richtung jedoch relativ schmal sind. Diese Taschen können umlaufend geschlossen ausgebildet sein, sodass sie lediglich eine entsprechende Einführöffnung für die Laschen an der axialen Stirnseite des Magnetelements aufweisen. Somit ist eine einfache Verbindung möglich.

Jeweils zumindest eine Kante, insbesondere eine axiale bzw. in axialer Richtung verlaufende Kante, der Laschen ist mit einer Zahnstruktur ausgebildet. Durch eine derartige gezahnte Kante wird erreicht, dass beim Einstecken der Laschen in die jeweiligen Aussparungen und beim Aufschmelzen des Magnetelements das aufgeschmolzene Material des Magnetelements in die gezahnte Struktur bzw. in die Spalten zwischen den einzelnen Zähnen gelangt, wodurch ein besonders fester Formschluss, insbesondere in Längsrichtung der Laschen und bevorzugt in axialer Richtung, gewährleistet wird. Mit anderen Worten hintergreifen die einzelnen Zähne der Zahnstruktur das Material des Magnetelements, sodass nach dem Abkühlen des Magnetelements ein erneutes zerstörungsfreies Trennen der beiden Verbindungspartner nicht mehr möglich ist.

Das Material des Magnetelements kann bereichsweise dadurch erwärmt und bevorzugt aufgeschmolzen werden, dass das Magnetelement und/oder die Hülse mit Ultraschall beaufschlagt wird. Das Verbinden der beiden Teile kann also in einem Ultraschallprozess durchgeführt werden, bei welchem mechanische Schwingung auf die Hülse und/oder das Magnetelement aufgebracht wird, durch welche eine Reibung entsteht, die zum Erwärmen des Materials des Magnetelements im Bereich der Verbindung führt. Auf diese Weise lassen sich die beiden Verbindungspartner besonders zuverlässig und ohne viel Aufwand miteinander verbinden.

Ergänzend oder alternativ kann das Erwärmen auch umfassen, dass die Laschen zunächst, insbesondere induktiv und/oder mittels eines Heizstempels, erwärmt werden. Die erwärmten Laschen können dann in die jeweiligen Aussparungen eingebettet werden. Hier wird das Material des Magnetelements mittelbar durch die Laschen erwärmt, welche auf eine solche Temperatur gebracht werden können, bei welcher die Laschen ohne viel Aufwand in die engeren Aussparungen unter Aufschmelzen des Kunststoffmaterials aufgenommen werden können. Auch diese Verbindungsart ist relativ einfach zu implementieren.

Bevorzugt ist die Hülse einstückig ausgebildet, sodass der Grundkörper und die Laschen eine integrale, einstückige Einheit bilden. Die Anzahl der Elemente ist somit auf ein Minimum reduziert.

Die einstückige Hülse wird somit insbesondere unmittelbar und ohne Einsatz von Zwischenelementen mit dem Magnetelement verbunden.

Auch das Magnetelement kann einstückig ausgebildet sein.

Das Magnetelement ist bevorzugt aus gefülltem Kunststoff gebildet, d.h. aus einem mit Magnetpartikeln gefüllten Kunststoff. Somit kann das Magnetelement partiell ohne viel Aufwand aufgeschmolzen werden.

Die Hülse ist bevorzugt aus Metall ausgebildet. Somit ist eine sichere Anbindung an die Lenkwelle möglich.

Die Laschen sind insbesondere so gestaltet, dass sie über die axiale Länge und partielle Öffnungen im Hülsenumfang bzw. im Grundkörper einen Wärmeausdehnungsausgleich zwischen den beiden Verbindungspartnern erlauben.

Die Erfindung betrifft außerdem eine Magneteinheit für eine Sensoreinrichtung, mit einem ringförmigen Magnetelement und einer mit dem Magnetelement verbundenen Hülse, über welche die Magneteinheit mit einem Wellenteil verbindbar ist. Die Hülse weist einen Grundkörper und eine Vielzahl von vom Grundkörper abstehenden Laschen auf, welche in jeweilige Aussparungen des Magnetelements, insbesondere formschlüssig, eingebettet sind.

Eine erfindungsgemäße Sensoreinrichtung ist zum Erfassen einer einen Rotationszustand einer Lenkwelle eines Kraftfahrzeugs charakterisierenden Messgröße ausgebildet und umfasst eine erfindungsgemäße Magneteinheit.

Ein erfindungsgemäßes Kraftfahrzeug, insbesondere ein Personenkraftwagen, umfasst eine erfindungsgemäße Sensoreinrichtung.

Die mit Bezug auf das erfindungsgemäße Verfahren vorgestellten bevorzugten Ausführungsformen und deren Vorteile gelten entsprechend für die erfindungsgemäße Magneteinheit, für die erfindungsgemäße Sensoreinrichtung sowie für das erfindungsgemäße Kraftfahrzeug.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar, aber nicht beansprucht.

Die Erfindung wird nun anhand eines bevorzugten Ausführungsbeispiels sowie unter Bezugnahme auf die beigefügte Zeichnung näher erläutert. Dabei veranschaulicht die einzige Figur in schematischer und perspektivischer Darstellung eine Magneteinheit mit einer Hülse und einem Magnetelement, welche miteinander verbunden werden.

Eine in der Figur dargestellte Magneteinheit 1 ist zum Einsatz in einem Kraftfahrzeug, insbesondere in einem Personenkraftwagen, konzipiert. Die Magneteinheit 1 ist Bestandteil einer Sensoreinrichtung, welche zum Erfassen eines Drehmoments und/oder eines Lenkwinkels einer Lenkwelle dient. Die Magneteinheit 1 wird dabei an einem Wellenteil der Lenkwelle befestigt.

Die Magneteinheit 1 umfasst eine aus Metall gebildete Hülse 2 sowie ein Magnetelement 3, welches ein Dauermagnet ist. Das Magnetelement 3 ist aus einem mit Magnetpartikeln gefüllten Kunststoff gebildet.

Das Magnetelement 3 ist ringförmig und wulstartig ausgebildet. An einer axialen Stirnseite 4 des Magnetelements 3 sind in axialer Richtung Aussparungen 5 ausgebildet, die als axiale Vertiefungen in der Stirnseite 4 ausgebildet sind. Die Aussparungen 5 sind umlaufend geschlossene Taschen, welche schlitzförmig ausgeführt sind. Die Aussparungen 5 sind in Umfangsrichtung äquidistant verteilt angeordnet. Es können beispielsweise drei oder vier oder fünf oder sechs oder sieben oder mehr solche Aussparungen 5 vorgesehen sein.

Die schlitzförmigen Aussparungen 5 sind in Umfangsrichtung länglich ausgeführt. Demgegenüber sind sie in radialer Richtung relativ schmal.

Die Hülse 2 weist einen Grundkörper 6 sowie eine Vielzahl von einstückig mit dem Grundkörper 6 ausgebildeten und von dem Grundkörper 6 in axialer Richtung abstehenden Laschen 7 auf. Die Anzahl der Laschen 7 entspricht dabei der Anzahl der Aussparungen 5. Die mit den Aussparungen 5 korrespondierenden Laschen 7 sind in radialer Richtung ebenfalls relativ schmal ausgebildet, in Umfangsrichtung jedoch länglich und somit insgesamt zahnförmig ausgeführt. Sie zeigen in axiale Richtung. Die Laschen 7 sind ebenfalls in Umfangsrichtung äquidistant verteilt angeordnet.

Die Laschen 7 stehen dabei von einer axialen Stirnseite 8 des ringförmigen Grundkörpers 6 axial ab, sodass sie insgesamt axiale Fortsätze bilden. Die Hülse 2 ist dabei so konzipiert, dass die Laschen 7 jeweils über einen in Umfangsrichtung ein wenig breiteren Steg 9 an die axiale Stirnseite 8 des Grundkörpers 6 angebunden sind. Die Stege 9 bilden dabei einen Anschlag, bis zu welchem die Laschen 7 in die jeweiligen Aussparungen 5 aufgenommen werden können. Weil die Stege 9 in Umfangsrichtung verteilt sind, sind zwischen den Stegen 9 axiale Vertiefungen 10 ausgebildet, welche ebenfalls in Umfangsrichtung verteilt sind. Durch diese Vertiefungen 10 ist im verbundenen Zustand ein Spalt zwischen der axialen Stirnseite 8 des Grundkörpers 6 einerseits und der axialen Stirnseite 4 des Magnetelements 3 andererseits gebildet. Dieser axiale Spalt hat insbesondere den Vorteil, dass ein Wärmeausdehnungsausgleich zwischen der Hülse 2 und dem Magnetelement 3 ermöglicht wird.

Jede Lasche 7 weist jeweils zwei axiale Kanten 11, 12 auf, die in axialer Richtung bzw. parallel zur Achse verlaufen. Die beiden axialen Kanten 11, 12 sind über eine Stirnkante 13 verbunden, die in Umfangsrichtung verläuft und senkrecht zu den Kanten 11, 12 angeordnet ist. Im Ausführungsbeispiel ist vorgesehen, dass die axialen Kanten 11, 12 jeder Lasche 7 eine Zahnstruktur 14 aufweisen.

Die Laschen 7 sind zumindest in Umfangsrichtung ein wenig breiter als die Aussparungen 5. Optional können die Laschen 7 auch in radialer Richtung ein wenig breiter als die Aussparungen 5 sein.

Das Verbinden der Hülse 2 mit dem Magnetelement 3 sieht folgendermaßen aus: Die Stirnkanten 13 der Laschen 7 werden zunächst in Anlage mit der axialen Stirnseite 4 des Magnetelements 3 gebracht, sodass die Laschen 7 über den jeweiligen Aussparungen 5 liegen. Dann wird die Hülse 2 und/oder das Magnetelement 3 mit Ultraschall beaufschlagt, sodass eine mechanische Schwingung aufgebracht wird und das Material des Magnetelements 3 aufgrund der Reibung erwärmt wird. Die Wärme wird dabei im Bereich der Aussparungen 5 erzeugt, sodass das Magnetelement 3 im Bereich der Aussparungen 5 aufgeschmolzen wird und die Laschen 7 in die Aussparungen 5 aufgenommen werden.

Auf diese Weise werden die Laschen 7 formschlüssig in die jeweiligen Aussparungen 5 eingebettet, wobei das aufgeschmolzene Material des Magnetelements 3 in die Zahnstruktur 14 gelangt. Die Laschen 7 werden so lange eingesteckt, bis die Stege 9 in Anlage mit der axialen Stirnseite 4 des Magnetelements 3 gebracht werden. Somit wird sowohl in axialer Richtung als auch in radialer Richtung und in Umfangsrichtung ein Formschluss gebildet.

Ergänzend oder alternativ zum Ultraschallprozess können die Laschen 7 im Voraus auch mittels eines Heizstempels und/oder induktiv erwärmt werden. Auch diese Erwärmung sorgt für ein aufwandsarmes Zusammenfügen der Hülse 2 mit dem Magnetelement 3.

## Patentansprüche

1. Verfahren zum Herstellen einer Magneteinheit (1) für eine Sensoreinrichtung zum Erfassen einer einen Rotationszustand einer Lenkwelle eines Kraftfahrzeugs charakterisierenden Messgröße durch:
- Bereitstellen eines ringförmigen Magnetelements (3),
- Bereitstellen einer Hülse (2) zum Verbinden der Magneteinheit (1) mit einem Wellenteil der Lenkwelle und
- Verbinden des Magnetelements (3) mit der Hülse (2),
**dadurch gekennzeichnet, dass**
die Hülse (2) mit einem Grundkörper (6) und einer Vielzahl von von dem Grundkörper (6) abstehenden Laschen (7) ausgebildet wird und das Verbinden umfasst, dass die Laschen (7) in jeweilige Aussparungen (5) des Magnetelements (3) unter Erwärmen des Magnetelements (3) eingebettet werden, wobei durch das Erwärmen das Magnetelement (3) innerhalb der Aussparungen (5) aufgeschmolzen wird und hierdurch eine Formschlüssige Verbindung zwischen den Laschen (7) einerseits und dem Magnetelement (3) andererseits gebildet wird.

2. Verfahren nach Anspruch 1 ,
**dadurch gekennzeichnet, dass**
die Laschen (7) von dem Grundkörper (6) in axialer Richtung abstehen und in die jeweiligen Aussparungen (5) in axialer Richtung aufgenommen werden.

3. Verfahren nach einem der vorhergehenden Ansprüche,
**dadurch gekennzeichnet, dass**
die Aussparungen (5) durch, insbesondere schlitzartige, axiale Taschen gebildet werden, die an einer axialen Stirnseite (4) des Magnetelements (3) ausgebildet werden.

4. Verfahren nach einem der vorhergehenden Ansprüche,
**dadurch gekennzeichnet, dass**
jeweils zumindest eine Kante (11, 12, 13), insbesondere eine axiale Kante (11, 12), der Laschen (7) mit einer Zahnstruktur (14) ausgebildet wird.

5. Verfahren nach einem der vorhergehenden Ansprüche,
**dadurch gekennzeichnet, dass**
das Erwärmen durch Beaufschlagen des Magnetelements (3) und der Hülse (2) mit Ultraschall durchgeführt wird.

6. Verfahren nach einem der vorhergehenden Ansprüche,
**dadurch gekennzeichnet, dass**
das Erwärmen umfasst, dass die Laschen (7) zunächst, insbesondere induktiv und/oder mittels eines Heizstempels, erwärmt und dann in die jeweiligen Aussparungen (5) eingebettet werden.

7. Verfahren nach einem der vorhergehenden Ansprüche,
**dadurch gekennzeichnet, dass**
die Hülse (2) einstückig ausgebildet wird.

8. Verfahren nach einem der vorhergehenden Ansprüche,
**dadurch gekennzeichnet, dass**
die Hülse (2) aus Metall bereitgestellt wird.

9. Verfahren nach einem der vorhergehenden Ansprüche,
**dadurch gekennzeichnet, dass**
das Magnetelement (3) aus gefülltem Kunststoff bereitgestellt wird.

10. Magneteinheit (1) für eine Sensoreinrichtung zum Erfassen einer einen Rotationszustand einer Lenkwelle eines Kraftfahrzeugs charakterisierenden Messgröße, mit einem ringförmigen Magnetelement (3) und einer mit dem Magnetelement (3) verbundenen Hülse (2), über welche die Magneteinheit (1) mit einem Wellenteil der Lenkwelle verbindbar ist,
**dadurch gekennzeichnet, dass**
die Hülse (2) einen Grundkörper (6) und eine Vielzahl von von dem Grundkörper (6) abstehenden Laschen (7) aufweist, welche in jeweilige Aussparungen (5) des Magnetelements (3) formschlüssig eingebettet sind, wobei die formschlüssige Verbindung zwischen den Laschen (7) einerseits und dem Magnetelement (3) andererseits durch Aufschmelzen des Magnetelements (3) innerhalb der Aussparungen (5) gebildet ist.

11. Sensoreinrichtung zum Erfassen einer einen Rotationszustand einer Lenkwelle eines Kraftfahrzeugs charakterisierenden Messgröße, umfassend eine Magneteinheit (1) nach Anspruch 10.

12. Kraftfahrzeug mit einer Sensoreinrichtung nach Anspruch 11.

## Claims

1. Method for producing a magnet unit (1) for a sensor device for detecting a measured variable characterizing a rotational state of a steering shaft of a motor vehicle by:
- providing an annular magnet element (3),
- providing a sleeve (2) for connecting the magnet unit (1) to a shaft part of the steering shaft, and
- connecting the magnet element (3) to the sleeve (2),
**characterized in that**
the sleeve (2) is formed with a base body (6) and a multiplicity of tabs (7) projecting from the base body (6), and the connection comprises the tabs (7) being embedded in respective recesses (5) in the magnet element (3) by heating the magnet element (3), wherein, as a result of the heating, the magnet element (3) is melted within the recesses (5) and in this way a form-fitting connection is formed between the tabs (7) on the one hand and the magnet element (3) on the other hand.

2. Method according to Claim 1,
**characterized in that**
the tabs (7) protrude from the base body (6) in the axial direction and are accommodated in the respective recesses (5) in the axial direction.

3. Method according to one of the preceding claims,
**characterized in that**
the recesses (5) are formed by axial pockets, in particular slit-like pockets, which are formed on an axial front side (4) of the magnet element (3).

4. Method according to one of the preceding claims,
**characterized in that**
in each case at least one edge (11, 12, 13), in particular an axial edge (11, 12), of the tabs (7) is formed with a tooth structure (14).

5. Method according to one of the preceding claims,
**characterized in that**
the heating is carried out by subjecting the magnet element (3) and the sleeve (2) to ultrasound.

6. Method according to one of the preceding claims,
**characterized in that**
the heating comprises the tabs (7) first being heated, in particular inductively and/or by means of a heating punch, and then embedded in the respective recesses (5).

7. Method according to one of the preceding claims,
**characterized in that**
the sleeve (2) is formed in one piece.

8. Method according to one of the preceding claims,
**characterized in that**
the sleeve (2) is provided from metal.

9. Method according to one of the preceding claims,
**characterized in that**
the magnet element (3) is provided from filled plastic.

10. Magnet unit (1) for a sensor device for detecting a measured variable characterizing a rotational state of a steering shaft of a motor vehicle, having an annular magnet element (3) and a sleeve (2) which is connected to the magnet element (3) and via which the magnet unit (1) can be connected to a shaft part of the steering shaft,
**characterized in that**
the sleeve (2) has a base body (6) and a multiplicity of tabs (7) projecting from the base body (6), which are embedded in a form-fitting manner in respective recesses (5) in the magnet element (3), wherein the form-fitting connection between the tabs (7) on the one hand and the magnet element (3) on the other hand is formed by melting the magnet element (3) within the recesses (5) .

11. Sensor device for detecting a measured variable characterizing a rotational state of a steering shaft of a motor vehicle, comprising a magnet unit (1) according to Claim 10.

12. Motor vehicle having a sensor device according to Claim 11.

## Revendications

1. Procédé de fabrication d'une unité magnétique (1) pour un dispositif de capteur destiné à saisir une grandeur de mesure qui caractérise l'état de rotation d'une colonne de direction d'un véhicule automobile, par :
préparation d'un élément magnétique annulaire (3),
préparation d'une douille (2) destinée à relier l'unité d'aimant (1) à une partie de la colonne de direction et
liaison de l'élément magnétique (3) à la douille (2),
**caractérisé en ce que**
la douille (2) est configurée avec un corps de base (6) et plusieurs pattes (7) qui débordent du corps de base (6) et la liaison comporte l'incorporation des pattes (7) dans des découpes (5) respectives de l'élément magnétique (3) avec chauffage de l'élément magnétique (3), le chauffage entraînant la fusion de l'élément magnétique (3) à l'intérieur des découpes (5) et formant ainsi une liaison en correspondance géométrique entre les pattes (7) d'une part et l'élément magnétique (3) d'autre part.

2. Procédé selon la revendication 1, **caractérisé en ce que** les pattes (7) débordent du corps de base (6) dans la direction axiale et sont reprises dans les découpes (5) respectives dans la direction axiale.

3. Procédé selon l'une des revendications précédentes, **caractérisé en ce que** les découpes (5) sont formées par des poches axiales, en particulier de type fente, formées sur un côté frontal axial (4) de l'élément magnétique (3).

4. Procédé selon l'une des revendications précédentes, **caractérisé en ce qu'**au moins un champ (11, 12, 13) des pattes (7), en particulier un champ axial (11, 12), est configuré avec une structure dentée (14) .

5. Procédé selon l'une des revendications précédentes, **caractérisé en ce que** le chauffage est réalisé en appliquant des ultrasons sur l'élément magnétique (3) et la douille (2).

6. Procédé selon l'une des revendications précédentes, **caractérisé en ce que** le chauffage comporte d'abord le chauffage des pattes (7), en particulier par induction et/ou au moyen d'un tampon chauffant, et ensuite leur incorporation dans les découpes (5) respectives.

7. Procédé selon l'une des revendications précédentes, **caractérisé en ce que** la douille (2) est formée d'une seule pièce.

8. Procédé selon l'une des revendications précédentes, **caractérisé en ce que** la douille (2) est réalisée en métal.

9. Procédé selon l'une des revendications précédentes, **caractérisé en ce que** l'élément magnétique (3) est réalisé en matière synthétique chargée.

10. Unité magnétique (1) pour un dispositif de capteur destiné à saisir une grandeur de mesure qui caractérise l'état de rotation d'une colonne de direction d'un véhicule automobile, présentant:
un élément magnétique annulaire (3) et une douille (2) reliée à l'élément magnétique (3) et par laquelle l'unité magnétique (1) peut être reliée à une partie de la colonne de direction,
**caractérisée en ce que**
la douille (2) présente un corps de base (6) et plusieurs pattes (7) débordant du corps de base (6) et incorporées en correspondance géométrique dans des découpes (5) respectives de l'élément magnétique (3), la liaison entre les pattes (7), d'une part, et l'élément magnétique (3), d'autre part, s'effectuant par fusion de l'élément magnétique (3) à l'intérieur des découpes (5).

11. Dispositif de capteur destiné à saisir une grandeur de mesure qui caractérise une position en rotation d'une colonne de direction d'un véhicule automobile et comprenant une unité magnétique (1) selon la revendication 10.

12. Véhicule automobile doté d'un dispositif de capteur selon la revendication 11.
